# FASCICULE DE BREVET EUROPEEN

(11) **EP 3 328 543 B1**
(45) Date de publication et mention de la délivrance du brevet: **01.04.2020**
(21) Numéro de dépôt: 16757312.0
(22) Date de dépôt: 29.07.2016
(51) Int. Cl.: B01J 35/00, C01G 23/053, H01G 9/20, C01G 23/08

(54) **DIOXYDE DE TITANE MACRO ET MÉSOPOREUX CRISTALLIN ET PROCÉDÉ D'OBTENTION**
KRISTALLINES MAKRO- UND MESOPORÖSES TITANDIOXID UND VERFAHREN ZU DESSEN HERSTELLUNG
CRYSTALLINE MACRO- AND MESOPOROUS TITANIUM DIOXIDE AND METHOD FOR OBTAINING SAME

(30) Priorité: 30.07.2015 FR 1557316
(43) Date de publication de la demande: 06.06.2018
(73) Titulaire: Total SA, 92400 Courbevoie (FR); Ecole Nationale Supérieure de Chimie de Montpellier, 34090 Montpellier (FR); Centre National de la Recherche Scientifique (CNRS), 75016 Paris (FR)
(72) Inventeur: BOSCARO, Paolo, 34000 Montpellier (FR); HULEA, Vasile, 34090 Montpellier (FR); FAJULA, François, 34820 Teyran (FR); GALARNEAU, Anne, 34250 Palavas les Flots (FR); LUCK, Francis, 93160 Noisy le Grand (FR)
(74) Mandataire: Plasseraud IP
(86) Numéro de dépôt international: PCT/FR2016/051987
(87) Numéro de publication internationale: WO 2017/017390

(56) Documents cités:
- JP-A- 2009 269 766
- SHAO G S ET AL: "Preparation and photocatalytic activity of hierarchically mesoporous-macroporous TiO2-xNx", APPLIED CATALYSIS B: ENVIRONMENTAL, ELSEVIER, AMSTERDAM, NL, vol. 82, no. 3-4, 8 août 2008 (2008-08-08) , pages 208-218, XP022939905, ISSN: 0926-3373, DOI: 10.1016/J.APCATB.2008.01.026 [extrait le 2008-02-07]
- RUDINA BLETA ET AL: "Nanoparticle Route for the Preparation in Aqueous Medium of Mesoporous TiO 2 with Controlled Porosity and Crystalline Framework", JOURNAL OF PHYSICAL CHEMISTRY C, vol. 114, no. 5, 11 février 2010 (2010-02-11), pages 2039-2048, XP055275177, US ISSN: 1932-7447, DOI: 10.1021/jp909646h

## Description

### Domaine technique

Le domaine technique dans lequel se situe particulièrement l'invention est celui des matériaux utilisables en tant que photocatalyseurs activés par rayonnement dans le spectre visible, et plus particulièrement celui des matériaux à base d'oxyde de titane (TiO₂) utilisables en tant que photocatalyseurs activés par rayonnement dans le spectre visible, notamment pour la dégradation de polluants dans l'air et dans l'eau ou le craquage de l'eau, et leurs procédés de fabrication.

### État de la technique

L'état de la technique montre actuellement que l'obtention d'un taux de conversion (c'est-à-dire le rapport entre la quantité de réactif transformé et la quantité totale de réactif présent dans un volume donné et à un temps donné) élevé nécessite le développement de matériaux nanostructurés fonctionnant comme catalyseur avec une composition bien définie et contrôlée ainsi qu'une forme spécifique.

En ce qui concerne les photocatalyseurs à base de TiO₂, parmi les meilleurs résultats obtenus on peut citer des catalyseurs comprenant des nanotubes de TiO₂ que l'on fait croître sur des feuilles en titane. Ces photocatalyseurs sont activés par rayonnement exclusivement dans le spectre visible.

Bien que ces photocatalyseurs soient très efficaces en phase gazeuse, leur utilisation en phase liquide ne peut être envisagée à cause de l'instabilité des nanotubes déposés sur les feuilles.

D'autres photocatalyseurs à base de TiO₂ ont été étudiés. Notamment, le TiO₂ Degussa P25 fait figure de photocatalyseur à base de TiO₂ de référence. Ce photocatalyseur s'avère être efficace sous rayonnement UV. Cependant, sa capacité à absorber la lumière n'est pas satisfaisante.

Afin d'améliorer la capacité des photocatalyseurs à base de TiO₂ à absorber la lumière, des particules de métaux nobles, tels que le platine, le palladium, l'or et l'argent, ont été ajoutées.

Le document « Influence de la longueur d'onde d'excitation (UV ou lumière visible) sur l'activité photocatalytique de l'oxyde de titane comprenant des nanoparticules d'or pour la génération d'hydrogène ou d'oxygène à partir d'eau » (titre original en anglais : « Influence of Excitation Wavelength (UV or Visible Light) on the Photocatalytic Activity of Titania Containing Gold Nanoparticles for the Generation of Hydrogen or Oxygen from Water », G.C. Silva et al., J. Am. Chem. Soc., 2011, 113, 595-602) et « Photocatalyseur plasmonique pour l'évolution de l'hydrogène dans le craquage catalytique de l'eau » (titre original en anglais : « Plasmonic Photocatalyst for H2 Evolution in Photocatalytic Water Splitting », J.J. Chen et al., J. Phys. Chem. C, 2011, 115, 210-216) décrivent des procédés pour la synthèse de photocatalyseurs mésoporeux à base de TiO₂ et d'or pour le craquage de l'eau. Ces matériaux sont nanométriques et sont constitués de particules de TiO₂ « P25 » de 20 nm à 30 nm de diamètre avec des particules d'or de 2 nm à 4 nm de diamètre.

L'absorption de ces matériaux est intense dans l'UV, notamment à 300 nm, mais est nulle à 400 nm et extrêmement faible entre 500 nm et 600 nm.

Le document « Amélioration de l'activité photocatalytique par déposition de métal : caractéristation et efficacité photonique de Pt, Au et Pd déposé sur un catalyseur à base de TiO₂ » (titre original en anglais : « Enhancement of photocatalytic activity by metal deposition: characterisation and photonic efficiency of Pt, Au and Pd depositied on TiO2 catalyst », S. Sakthivel et al., Water Res., 2004, 38, 3001-3008) décrit un procédé pour la synthèse d'un photocatalyseur à base de TiO₂ présentant du platine, de l'or ou du palladium déposé en surface pour la dégradation de colorants organiques, notamment l'acide green 16 sous rayonnement UV. Ce matériau présente une absorption à 500 nm supérieure à celle à 400 nm.

Les articles « Préparation et caractérisation des photocatalyseurs à base de titane mésoporeux, comprenant de l'argent de taille nanométrique pour la dégradation d'herbicide » (titre original en anglais : « Préparation and characterisation of nano-silver/mesoporous titania photocatalysts for herbicide degradation », M.M. Mohamed et al., Microporous Mesoporous Mater., 2011, 142, 130-138) et «Dégradation photocatalytique d'herbicides sélectionnés dans des suspensions aqueux de TiO₂ dopé sous rayonnement visible » (titre original en anglais : « Photocatalytic degradation of selected herbicides in aqueous suspensions of doped titania under visible light irradiation », D. V. Sojic et al., J. Hazard. Mater., 2010, 179, 49-56) décrivent la synthèse de matériaux à base de TiO₂ pour la dégradation d'herbicides dans l'eau. Ces matériaux comprennent par ailleurs également de l'argent, du fer ou de l'azote. Le matériau à base de TiO₂ et d'argent est synthétisé à partir d'éther de polyoxyéthylène lauryle (POL), d'AgNO₃ et de Ti(OiPr)₄ et se présente sous forme de nanoparticules de diamètre compris entre 15 et 25 nm. L'absorption à la lumière visible n'est pas donnée pour ce matériau. Le matériau à base de TiO₂ et de Fe est synthétisé à partir de FeCl₃ (trichlorure de fer III) et de TiCl₄ (tétrachlorure de titane). Il se présente sous la forme de nanoparticules de diamètre compris entre 5 et 7 nm. La réflectance de ce matériau est quasiment de 100% à 500 nm correspondant à une absorbance F(R) (Kubelka-Munk) de 0. Le matériau à base de TiO₂ et d'azote est synthétisé à partir de Ti(OH)₄ (tétrahydroxyde de titane) et d'urée. Il se présente sous la forme de nanoparticules de diamètre compris entre 6 et 8 nm et sa réflectance à 400 nm est proche de 40% correspondant à une absorbance F(R) (Kubelka-Munk) de 0.44 alors que celle à 500 nm est proche de 90% correspondant à une absorbance F(R) (Kubelka-Munk) de 0,005, soit une absorption de la lumière à 500 nm de 1 % de l'absorption de la lumière à 400 nm.

L'article « Dégradation photocatalytique de lindane sous lumière UV et visible utilisant du TiO₂ dopé au N » (titre original en anglais : « Photocatalytic degradation of lindane under UV and visible light using N-doped TiO2 », J. Senthilnathan et al., Chem. Eng. J., 2010, 161, 83-92) décrit la synthèse d'un matériau à base de TiO₂ dopé à l'azote pour la dégradation d'un pesticide. Ce matériau est obtenu à partir Ti(OiPr)₄ dans EtOH et N(CH₃CH₂)₃ (triéthylamine) en milieu acide. Il se présente sous forme de nanoparticules de taille comprise entre 29 et 71 nm.

Le document CN102744059 décrit un procédé pour la synthèse d'un photocatalyseur mésoporeux en TiO₂ et en argent pour la dépollution de l'eau de lac, de mer, des égouts et des eaux usées industrielles.

Ainsi, certains de ces photocatalyseurs nécessitent l'utilisation de nanoparticules de métaux nobles et sont par conséquent plus onéreux.

Par ailleurs, la plupart de ces photocatalyseurs peuvent être difficiles à synthétiser. En outre, ils sont sujets au mûrissement d'Ostwald, phénomène dans lequel les nanoparticules s'agrègent les unes aux autres ce qui provoque leur désactivation progressive, par conséquent, les nanoparticules sont peu stables thermiquement. Par ailleurs, les nanoparticules à base de TiO₂ en suspension dans une solution sont difficiles à séparer de cette solution.

Ainsi, un matériau à base de TiO₂ présentant une absorbance dans le spectre visible, dont la fabrication est peu onéreuse et dont la manipulation est aisée constitue toujours un besoin qui n'est à ce jour pas encore satisfait.

### Présentation de l'invention

Un objectif est donc ici notamment de proposer un procédé permettant la fabrication d'un matériau qui pallie les inconvénients de l'art antérieur présenté ci-dessus.

Pour cela, un procédé de préparation de dioxyde de titane (TiO₂) macro et mésoporeux cristallin. Ce procédé comprend :
- la préparation d'un mélange acidifié comprenant un séparateur, le mélange étant acidifié à au moins 25 % en masse, préférablement au moins 30 %, préférablement au moins 33 %, préférablement au moins 35 %, préférablement environ 37 %en acide par la dissolution d'un séparateur dans un acide hydrate ;
- l'ajout en deux temps à une source de titane du mélange acidifié comprenant un séparateur et d'une source d'azote :
- dans un premier temps, le mélange acidifié comprenant un séparateur est ajouté à une solution comprenant la source de titane formant ainsi une solution de titane acidifiée, le séparateur étant un poly(éthylène glycol) ;
- dans un deuxième temps, la source d'azote est ajoutée à la solution de titane acidifiée formant ainsi une solution de titane dopé à l'azote ;
- l'obtention d'un gel de dioxyde de titane à partir de la solution de titane dopé à l'azote ;
- le lavage du gel de dioxyde de titane avec un alcool ;
- l'obtention d'un dioxyde de titane macro et mésoporeux cristallin à partir du gel de dioxyde de titane lavé.

Un tel procédé a pour avantage non négligeable de permettre la fabrication d'un matériau à base de Ti02 présentant une absorbance dans le spectre visible exceptionnelle, par exemple l'absorbance de la lumière à 400 nm est supérieure à 0,2 en absorbance F(R) (Kubelka-Munk) et celle à 500 nm supérieure à 17 %, de préférence 20 %, de l'absorption de la lumière à 400 nm.

L'obtention du gel de dioxyde de titane à partir de la solution de titane dopé à l'azote est réalisée préférablement par le chauffage de la solution de titane dopé à l'azote.

L'obtention du dioxyde de titane macro et mésoporeux cristallin à partir du gel de dioxyde de titane lavé est réalisée préférablement par le séchage du gel de dioxyde de titane pour obtenir un dioxyde de titane macro et mésoporeux et la calcination du gel de dioxyde de titane macro et mésoporeux pour obtenir le dioxyde de titane macro et mésoporeux cristallin.

Le ratio molaire acide : source de titane est avantageusement compris entre 40 % et 65 %, préférablement entre 50 % et 60 %, préférablement entre 52 % et 58 %, préférablement environ 55 %. Les pourcentages sont calculés par rapport à la solution de titane acidifiée.

Le ratio molaire source d'azote : source de titane est avantageusement compris entre 70 % et 100 %, préférablement entre 75 % et 95 %, préférablement encore entre 80 % et 90 %, préférablement environ 87 %. Les pourcentages sont calculés par rapport à la solution de titane dopé à l'azote.

La source de titane est avantageusement un alcoolate de titane, préférablement un alcoolate en C1 à C5 de titane, préférablement un tétra-alcoolate en C1 à C5 de titane, préférablement un tétra-alcoolate en C2 à C4, préférablement un tétra-alcoolate en C3, préférablement un tétra-isopropanolate de titane.

L'alcool est avantageusement un alcool en C1 à C5, préférablement un alcool en C2 à C4, préférablement un alcool en C3, préférablement le 2-propanol (alternativement, nous pouvons indiquer que l'alcool est un alcool secondaire).

L'acide hydrate est avantageusement choisi parmi : l'acide chlorhydrique, l'acide nitrique, l'acide acétique, l'acide phosphorique, préférablement l'acide chlorhydrique.

Le séparateur est avantageusement un poly(éthylène glycol) de masse atomique moyenne comprise entre 1 et 150 kDa, préférablement entre 10 et 50 kDa, préférablement entre 15 et 25 kDa, préférablement environ 20 kDa. Le ratio molaire de l'unité EO du poly(éthylène glycol) : source de titane est avantageusement compris entre 4 et 25 %, 4,75 et 22 %, préférablement entre 5 et 5,5 ou entre 17 et 20%, préférablement environ 5,3 % ou 18%.

La source d'azote est avantageusement un amide ou une amine, préférablement un amide, préférablement un N-alkyl en C1 à C3-formamide, préférablement le N-méthylformamide.

La source d'azote est avantageusement ajoutée après que la solution de titane acidifiée, à partir d'un aspect translucide, est devenue opaque.

Le chauffage est avantageusement réalisé préférablement en deux temps, pendant un premier temps, la solution de titane dopé à l'azote est chauffée à une première température, et dans un deuxième temps, la solution de titane dopé à l'azote est chauffée à une deuxième température supérieure à la première température, afin d'obtenir le gel de dioxyde de titane. Alternativement, la solution de titane est chauffée directement à la température supérieure.

La solution de titane dopé à l'azote est préférablement chauffée à une première température est avantageusement comprise entre 30 et 70 °C, préférablement entre 35 et 65 °C, préférablement entre 37 et 45 °C, préférablement environ 40 °C. Optionnellement, la solution de titane dopé à l'azote est ensuite chauffée à une deuxième température comprise entre 45 et 75 °C, préférablement entre 55 et 65 °C, préférablement entre 37,5 et 42,5 °C, préférablement environ 60 °C. Les durées de chacun des temps de chauffage sont indépendamment comprises entre 6 et 48 heures, préférablement entre 12 et 36 heures, préférablement entre 20 et 28 heures, préférablement environ 24 heures.

La solution de titane dopé à l'azote est avantageusement transférée dans un récipient hermétiquement scellé avant le chauffage.

Le gel de dioxyde de titane est lavé avec un alcool, préférablement un alcool en C1 à C5, préférablement un alcool en C2 à C4, préférablement un alcool en C3, préférablement l'isopropanol, avant le séchage.

Le séchage est avantageusement réalisé à température ambiante.

Le dioxyde de titane macro et mésoporeux est avantageusement calciné après séchage, préférablement à une température comprise entre 250 et 450 °C, préférablement 300 et 380 °C, préférablement 330 et 370 °C, préférablement environ 350 °C pour obtenir le dioxyde de titane macro et mésoporeux cristallin. La calcination est avantageusement effectuée pendant une durée comprise entre 4 et 6 heures, préférablement 4,5 et 5,5 heures, préférablement 4,75 et 5,25 heures, préférablement 5 heures.

L'invention propose aussi un dioxyde de titane macro et mésoporeux, comprenant un réseau macroporeux présentant un diamètre moyen de pores comprise entre 1 µm et 5 µm, préférablement entre 2 µm et 4 µm, préférablement entre 2,5 µm et 3,5 µm, préférablement 3 µm et une épaisseur de paroi comprise entre 0,2 µm et 3,8 µm, préférablement entre 0,5 µm et 2,5 µm, préférablement entre 0,75 µm et 1,25 µm, préférablement 1 µm,
et un réseau mésoporeux présentant un diamètre moyen de pores compris entre 5 et 20 nm, préférablement 5,8 et 10 nm, préférablement entre 6 et 7 nm ; une surface spécifique comprise entre 50 et 300 m²/g, préférablement entre 90 et 165 m²/g, préférablement entre 95 et 155 m²/g, préférablement entre 100 et 150 m²/g ; et un volume mésoporeux compris entre 0,05 et 0,7 mL/g, préférablement entre 0,07 et 0,5 mL/g, préférablement entre 0,09 et 0,3 mL/g, préférablement entre 0,1 et 0,2 mL/g. Ce dioxyde de titane macro et mésoporeux cristallin peut en particulier être obtenu avec le procédé décrit ci-dessus.

Dans tous les cas, le dioxyde de titane est préférablement sous forme monolithique ou de poudre micrométrique.

### Dessins

D'autres objectifs, caractéristiques et avantages ressortiront de la description donnée ci-après à titre illustratif et non limitatif, en référence aux dessins parmi lesquels :
- la figure 1 est un diagramme illustrant les étapes du procédé selon l'invention ;
- la figure 2 présente deux photos prises sous microscope électronique à balayage d'un TiO₂ selon l'invention (TiE1) et d'un TiO₂ obtenu à partir d'un procédé de l'art antérieur (TiEC) ;
- la figure 3 présente les spectres d'absorption dans le domaine visible de TiE1 (trait plein), TiEC (trait mixte) et d'un TiO₂ de référence P25 (pointillés) ; et
- la figure 4 présente la disparition du colorant Orange G Dye d'une solution dans laquelle TiE1 ou TiEC a été immergé sous lumière naturelle (traits pleins) et la quantité de colorant Orange G Dye adsorbée par TiE1 ou TiEC immergé dans la solution de colorant disposée dans le noir (pointillés) en pourcentage par rapport à la quantité initiale.

### Description

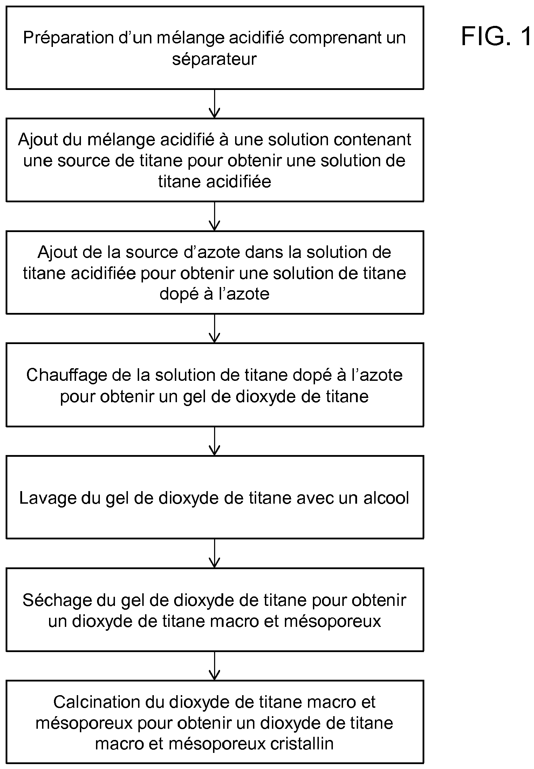

En référence à la figure 1, un procédé de préparation de dioxyde de titane (TiO₂) macro et mésoporeux cristallin est décrit ci-après.

Le terme « macroporeux » désigne dans l'ensemble du présent exposé, la caractéristique de présenter un réseau macroporeux présentant un diamètre moyen de pores comprise entre 1 µm et 5 µm, préférablement entre 2 µm et 4 µm, préférablement entre 2,5 µm et 3,5 µm, préférablement 3 µm et une épaisseur de paroi comprise entre 0,2 µm et 3,8 µm, préférablement entre 0,5 µm et 2,5 µm, préférablement entre 0,75 µm et 1,25 µm, préférablement 1 µm.

Le terme « mésoporeux » désigne dans l'ensemble du présent exposé, la caractéristique de présenter un réseau mésoporeux présentant un diamètre moyen de pores compris entre 5 et 20 nm, préférablement entre 5,8 et 10 nm, préférablement entre 6 et 7 nm. Ce réseau mésoporeux présente particulièrement une surface spécifique comprise entre 50 et 300 m²/g, préférablement entre 90 et 165 m²/g, préférablement entre 95 et 155 m²/g, préférablement entre 100 et 150 m²/g. Ce réseau poreux présente encore un volume mésoporeux compris entre 0,05 et 0,7 mL/g, préférablement entre 0,07 et 0,5 mL/g, préférablement entre 0,09 et 0,3 mL/g, préférablement entre 0,1 et 0,2 mL/g.

Ce procédé comprend tout d'abord la préparation d'un mélange acidifié comprenant un séparateur, le mélange étant acidifié à au moins 25 % en masse, préférablement au moins 30 %, préférablement au moins 33 %, préférablement au moins 35 %, préférablement environ 37 % en acide par la dissolution d'un séparateur dans un acide hydrate.

Le séparateur de phase désigne un composé s'intercalant, à mesure que le TiO₂ se forme, entre ce dernier et l'eau, ce qui permet d'obtenir une structure macroporeuse après son élimination.

Le séparateur est un poly(éthylène glycol), préférablement de masse atomique moyenne comprise entre let 150 kDa, préférablement entre 10 et 50 kDa, préférablement entre 15 et 25 kDa, préférablement environ 20 kDa.

L'acide hydrate est préférablement choisi parmi : l'acide chlorhydrique, l'acide nitrique, l'acide acétique, et l'acide phosphorique, préférablement l'acide chlorhydrique.

Le procédé comprend encore l'ajout en deux temps à une source de titane du mélange acidifié comprenant un séparateur et d'une source d'azote. Ainsi, dans un premier temps, le mélange acidifié comprenant un séparateur est ajouté à une solution comprenant la source de titane formant ainsi une solution de titane acidifiée. Puis, dans un deuxième temps, la source d'azote est ajoutée à la solution de titane acidifiée formant ainsi une solution de titane dopé à l'azote, de préférence, la source d'azote est ajoutée après que la solution de titane acidifiée, à partir d'un aspect translucide, est devenue opaque.

La source de titane est préférablement un alcoolate de titane. L'alcoolate de titane désigne un composé de formule générale Ti(OR1)(OR2)(OR3)(OR4) où chacun des R1 à R4 désigne, indépendamment des autres, une chaine carbonée comprenant entre 1 et 8 atomes de carbone, préférablement entre 1 et 5, préférablement entre 2 et 4, préférablement 3. Ainsi, la source de titane est avantageusement un alcoolate en C₁ à C₅ de titane, préférablement un tétra-alcoolate en C₁ à C₅ de titane, préférablement un tétra-alcoolate en C₂ à C₄, préférablement un tétra-alcoolate en C₃, préférablement un tétra-isopropanolate de titane.

Les chaînes carbonées peuvent être linéaires ou ramifiées.

Les chaînes carbonées ramifiées comprennent nécessairement 3 ou plus d'atomes de carbone. Les chaînes carbonées ramifiées comprenant entre 3 et 5 atomes de carbones sont choisies parmi le groupe constitué de : -CH(CH3)2 (isopropyle) ; -CH(CH3)-CH2-CH3 (sec-butyle) ;-CH2-CH(CH3)2 (isobutyle) ;-CH(CH3)3 (tert-butyle) ; - CH(CH3)-CH2-CH2-CH3 (1-méthylbutyle) ; -CH(CH3)-CH(CH3)2 (1,2-diméthylpropyle) ; -CH2-CH(CH3)-CH2-CH3 (2-méthylbutyle) ; -CH2-C(CH3)3 (2,2-diméthylpropyle) ; -(CH2)2-CH(CH3)2 (3-méthylbutyle) ; -CH(CH2-CH3)2 (1-éthylpropyle) ; et -C(CH3)2-CH2-CH3(1,1-diméthylpropyle).

Avantageusement, R1 à R4 désignent la même chaîne carbonée comprenant entre 3 et 5 atomes de carbone. Ainsi, l'alcoxyde de titane peut être choisi parmi le groupe constitué de : Ti(OiPr)4 (tétra(isopropoxyde) de titane) ; Ti(Osec-Bu)4 (tétra(sec-butoxide) de titane) ; Ti(OiBu)4(tétra(isobutoxyde) de titane) ; Ti(Otert-Bu)4(tétra(tert-butoxide) de titane) ; Ti(OCH(CH3)-CH2-CH2-CH3)4 (tétra(1-méthylbutanolate) de titane) ; Ti(OCH(CH3)-CH(CH3)2)4 (tétra(1,2-méthylpropanolate) de titane) ; Ti(OCH2-CH(CH3)-CH2-CH3)4 (tétra(2-méthylbutanolate) de titane) ; Ti(OCH2-C(CH3)3)4 (tétra(2-diméthylpropanolate) de titane) ; Ti(O(CH2)2-CH(CH3)2)4 (tétra(3-méthylbutanolate) de titane) ; Ti(OCH(CH2-CH3)2)4 (tétra(1-éthylpropanolate) de titane) ; et Ti(OC(CH3)2-CH2-CH3)4 (tétra(1-diméthylpropanolate) de titane).

De préférence, la chaîne carbonée ramifiée est le radical iPr (isopropyle : -CH(CH3)2). Ainsi, l'alcoolate de titane présente de préférence la formule : Ti(OiPr)4 (tétraisopropanolate de titane).

La source d'azote est préférablement un amide ou une amine, préférablement un amide, préférablement un N-alkyl en C₁ à C₃-formamide, préférablement le N-méthylformamide.

Dans le cas où le séparateur est un poly(éthylène glycol), le ratio molaire de l'unité EO du poly(éthylène glycol) : source de titane est compris entre 4 et 25 %, 4,75 et 22 %, préférablement entre 5 et 5,5 ou entre 17 et 20%, préférablement environ 5,3 % ou 18%.

Le ratio molaire acide : source de titane est avantageusement compris entre 40 % et 65 %, préférablement entre 50 % et 60 %, préférablement entre 52 % et 58 %, préférablement environ 55 %.

Le ratio molaire source d'azote : source de titane est avantageusement compris entre 70 % et 100 %, préférablement entre 75 % et 95 %, préférablement encore entre 80 % et 90 %, préférablement environ 87 %.

Le procédé comprend encore l'obtention d'un un gel de dioxyde de titane à partir de la solution de titane dopé à l'azote, préférablement par le chauffage de la solution de titane dopé à l'azote. La solution de titane dopé à l'azote est préférablement chauffée à une première température, avantageusement comprise entre 30 et 70 °C, préférablement entre 35 et 65 °C, préférablement entre 37 et 45 °C, préférablement environ 40 °C.

Le chauffage est avantageusement réalisé préférablement en deux temps afin d'obtenir le gel de dioxyde de titane. Pendant un premier temps, la solution de titane dopé à l'azote est chauffée à la première température. Dans un deuxième temps, la solution de titane dopé à l'azote est chauffée à une deuxième température supérieure à la première température. Alternativement, la solution de titane est chauffée directement à la deuxième température.

La deuxième température est avantageusement comprise entre 45 et 75 °C, préférablement entre 55 et 65 °C, préférablement entre 37,5 et 62,5 °C, préférablement environ 60 °C.

La durée de chacun des temps de chauffage est avantageusement comprise entre 6 et 48 heures, préférablement entre 12 et 36 heures, préférablement entre 20 et 28 heures, préférablement environ 24 heures.

Préalablement au chauffage, la solution de titane dopé à l'azote peut être transférée dans un récipient hermétiquement scellé.

Le procédé comprend encore le lavage avec un alcool.

L'alcool utilisé pour le lavage un alcool est préférablement un alcool en C₁ à C₅, préférablement un alcool en C₂ à C₄, préférablement un alcool en C₃, préférablement l'isopropanol, avant le séchage.

Le procédé comprend l'obtention d'un dioxyde de titane macro et mésoporeux cristallin, à partir du gel de dioxyde de titane lavé, préférablement par le séchage du gel de dioxyde de titane et la calcination du dioxyde de titane macro et mésoporeux pour obtenir le dioxyde de titane macro et mésoporeux cristallin.

Le séchage est avantageusement réalisé à température ambiante.

La calcination est réalisée avantageusement à une température comprise entre 250 et 450 °C, préférablement 300 et 380 °C, préférablement 330 et 370 °C, préférablement environ 350 °C. La calcination est avantageusement effectuée pendant une durée comprise entre 4 et 6 heures, préférablement 4,5 et 5,5 heures, préférablement 4,75 et 5,25 heures, préférablement 5 heures. Alternativement, un traitement thermique sous azote peut être effectuée à la place de la calcination.

Le procédé décrit ci-dessus permet d'obtenir un TiO₂ macro et mésoporeux cristallin. Ce TiO₂ macro et mésoporeux cristallin est décrit ci-après.

Ce TiO₂ macro et mésoporeux cristallin présente une macroporosité et une mésoporosité telles que décrites ci-dessus.

De manière générale, la macroporosité du matériau permet de faire passer un fluide à travers celui-ci en exerçant un différentiel de pressions de faible valeur, c'est-à-dire inférieur à environ 10 bars, de préférence inférieur à environ 7 bars, plus préférentiellement encore entre environ 1 bar et environ 5 bars afin de pouvoir utiliser ce matériau pour des traitements catalytiques en continu.

Par ailleurs, ces caractéristiques de macroporosité et de mésoporosité permettent d'éviter une perte de charge lorsqu'un différentiel de pressions est appliqué.

Ce TiO₂ comprend typiquement au moins 60 %, de préférence au moins 70 %, en masse de TiO₂ sous forme d'anatase et du carbone élémentaire et de l'azote élémentaire sous forme de trace, les pourcentages étant calculés par rapport à la masse totale du matériau. Il présente une absorbance dans le spectre visible exceptionnelle (notamment entre 400 et 700 nm). Par exemple, l'absorbance de la lumière à 400 nm est supérieure à F(R) (Kubelka-Munk) 0,2 et l'absorbance de la lumière à 500 nm est supérieure à 17 %, de préférence supérieure à 20 %, de l'absorbance de la lumière à 400 nm.

Le « spectre visible », également appelé « spectre optique », désigne la partie du spectre électromagnétique qui est visible pour l'œil humain et communément compris entre environ 400 nm et environ 800 nm. Il correspond à ce qu'on appelle aussi « lumière » qui désigne l'ensemble des ondes électromagnétiques visibles par l'œil humain. Les termes de « spectre visible », « spectre optique » ou « lumière » sont pris dans l'ensemble du présent exposé comme étant des synonymes. L'utilisation d'un terme ou d'un autre dans le présent exposé sera donc comprise comme une simple variation de formulation verbale et non comme déterminant une quelconque distinction.

La quantité de trace de C élémentaire et/ou de N élémentaire est déterminée par analyse chimique selon la méthode décrite ci-dessous.

Le C élémentaire et le N élémentaire sont présents sous forme de trace, c'est-à-dire que la quantité de chacun est inférieure ou égale à environ 2 %, de préférence inférieure ou égale à environ 1,5 %, encore de préférence inférieure à égale à environ 1 %, en masse par rapport à la masse totale du matériau. Avantageusement, la quantité totale de N et de C est de préférence inférieure à 2,5 %.

Ce TiO₂ est préférablement sous forme monolithique, c'est-à-dire avec un volume d'au moins 1 mm³, préférablement d'au moins 10 mm³. Ainsi, ce TiO₂ est plus facile à manipuler par rapport aux nanoparticules de TiO₂ de l'art antérieur et peut être aisément séparé de solutions dans lesquelles il a été ajouté, par exemple par sédimentation.

Le TiO₂ monolithique présente par exemple une forme de bâton, de pastille, de cylindre creux, de plaque, etc. et peut être présent seul ou fixé à un support.

Le TiO₂ peut être réduit en poudre micrométrique, i.e. dont les particules ont une taille de l'ordre du micromètre. Ainsi, les particules sous facilement séparées par filtration de la solution dans laquelle elles sont dispersées.

Le TiO₂ cristallin est exempt de métaux ce qui rend la synthèse plus simple car il n'y a besoin d'ajouter aucun additif métallique, supprimant ainsi la nécessité de prévoir la réduction de métaux avant leur utilisation. Ainsi, le matériau est plus économique.

Le TiO₂ cristallin peut être utilisé en tant que photocatalyseur pour la dégradation de polluants dans l'air ou dans l'eau sous rayonnement dans le spectre visible.

Il peut encore être utilisé en tant que photocatalyseur pour le craquage de l'eau en H₂ (hydrogène) sous rayonnement dans le spectre visible.

### Méthodes et exemples

**Matières premières.** Le tétraisopropanolate de titane (97 %) et le N-méthylformamide (NMF) (99 %) sont obtenus chez Aldrich. L'acide chlorhydrique (≥ 37 %) et l'isoproponol (and ≥ 99,8%) sont obtenus chez Sigma-Aldrich, le poly(glycol d'éthylène) (PEO) BioUltra à 20 kDa est obtenu chez Sigma. Le colorant Orange G dye (Certistein) est obtenu chez Merck. En ce qui concerne l'eau, une eau distillée a été utilisée pour l'ensemble des expériences. Des nanoparticules de TiO₂ de référence P25 (20% rutile, 80% anatase) sont obtenues chez Aldrich.

**Exemple.** Du TiO₂ macro et mésoporeux est synthétisé par voie sol-gel combinée à une méthode de décomposition spinodale. Un mélange acidifié comprenant du PEO est tout d'abord obtenu par la dissolution du PEO dans l'acide chlorhydrique 37% (en masse), le mélange étant acidifié à 35 % massique. Le mélange acidifié comprenant du PEO est ensuite ajouté à une solution comprenant du tétraisopropanolate de titane formant ainsi une solution de titane acidifiée. Quand la solution est passée d'un aspect translucide à opaque, le NMF est ajouté à la solution de titane acidifiée formant ainsi une solution de titane dopé à l'azote. Après 3 min, la solution de titane dopé à l'azote est transférée dans un flacon bouché à l'aide d'un couvercle, lequel est scellé à l'aide de Parafilm. Le flacon est ensuite chauffé à 40 °C pendant 24 h puis à 60 °C pendant 24 h. Un gel de TiO₂ est alors obtenu. Le gel de dioxyde de TiO₂ est alors lavé avec de l'isopropanol et séché à température ambiante pendant 2 jours pour obtenir un TiO₂ macro et mésoporeux. Le TiO₂ macro et mésoporeux est ensuite calciné à 350 °C (montée en température de 0,5 °C/min) pendant 5 h pour obtenir un TiO₂ macro et mésoporeux cristallin (ci-après appelé TiEl).

**Exemple comparatif (TiEC).** Afin de pouvoir comparer le TiO₂ macro et mésoporeux cristallin obtenu par le procédé de la présente invention avec ceux de l'art antérieur, un TiO₂ macro et mésoporeux cristallin a été synthétisé à selon une méthode décrite dans J. Am. Ceram. Soc., 93 (2010) 3110-3115 (ci-après appelé TiEC).

**Caractérisation.** La structure de TiE1 et TiEC a été analysée par diffraction de rayons X (XRD) à l'aide d'un diffractomètre Brucker D8 Advance avec une géométrie de Bragg-Brentano et équipé d'un détecteur Brucker Lynx Eye. Les clichés de XRD ont été obtenus pour les angles 2θ de 4° à 70°, par pas de 0,0197°, et avec un temps de comptage de 0,2 s par pas, afin de déterminer le type cristallographique de la phase.

Les propriétés texturales de TiE1 et TiEC ont été déterminées à partir des isothermes d'adsorption/désorption d'azote à 77 K à l'aide d'un appareil Micromeritics Tristar 3000. Les échantillons ont été préalablement soumis au vide à 523 K pendant 12 h.

Le diamètre mésoporeux des pores a été estimé par la méthode Broekhoff-de Boer, l'une des plus précises pour la détermination des tailles de pores dans le cas de silice mésoporeuse.

Le réseau macroporeux et le squelette de TiE1 et TiEC ont été examinés sous un microscope à balayage électronique Hitachi S-4500 I.

La réflectivité diffuse UV-visible a été mesurée dans la gamme allant de 200 à 700 nm à l'aide d'un spectrophotomètre Varian Cary 05^{E} UV-Vis-NIR avec BaSO₄ comme matériau de référence pour définir la ligne de base.

**Test de dégradation photocatalytique du colorant Orange G Dye.** Ce test a permis d'évalué l'activité de TiE1 et TiEC sous lumière naturelle (lumière du soleil). Le TiO₂ de référence P25 a été également soumis au test pour comparaison. Le colorant Orange G Dye a été utilisé dont la formule est représentée ci-dessous :

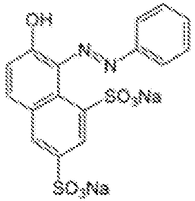

Une solution de colorant Orange G Dye à concentration de 80 mg/L a été utilisée pour les tests. 1 g de TiE1, respectivement TiEC, a été mis au contact de 40 mL de cette solution sous agitation. Pour chacun des TiO₂, deux tests ont été effectués : un premier sous lumière naturelle et un deuxième dans le noir. La disparition par dégradation ou par adsorption, respectivement, du colorant Orange G Dye a pu être suivie par la mesure de l'absorbance de la solution.

Les spectres UV-Vis des solutions ont été obtenus après séparation des photocatalyseurs de la solution par filtration et après 1, 5 et 10 h d'exposition et les efficacités de dégradation ont été calculées. La concentration relative du colorant Orange G Dye de chacune des solutions a été évaluée par l'absorbance moyenne dans la gamme de 400 à 500 nm.

**Mesure des spectres d'absorbance.** Les spectres de réflexion diffuse (DRUV) des échantillons solides sont mesurés avec un spectrophotomètre PerkinElmer Lambda-35 équipé d'une sphère intégrante (Labsphère) en utilisant comme référence BaSO₄. Les spectres DRUV sont ensuite convertis en unités Kubelka-Munk (F(R)) pour obtenir les spectres d'absorbance.

**Résultats.** Les diffractogrammes de RX montrent que TiE1 et TiEC sont sous forme majoritaire (> 90%) anatase.

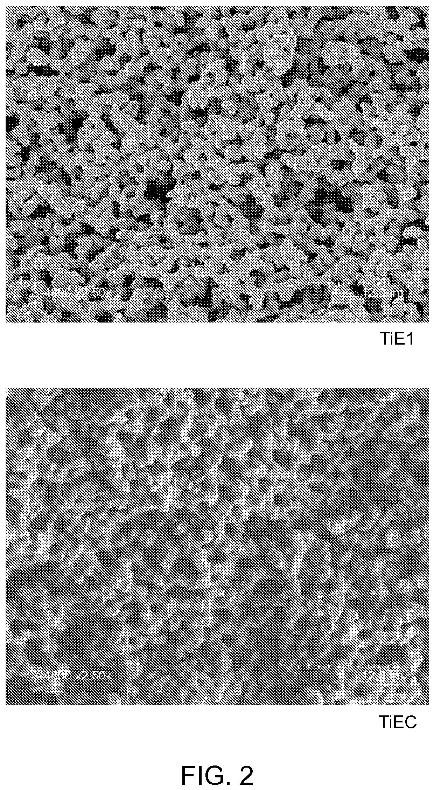

TiE1 et TiEC présentent des réseaux macroporeux homogènes similaires avec une taille de macropores d'environ 3 µm et une épaisseur de squelette d'environ 1 µm (figure 2). Les réseaux mésoporeux de TiE1 et TiEC présentent des propriétés texturales similaires récapitulées dans le tableau ci-dessous.

| | TiE1 | TiEC |
|---|---|---|
| diamètre des mésopores | 5,6 nm | 7,3 nm |
| surface spécifique | 109 m²/g | 141 m²/g |
| volume mésoporeux | 0,13 mL/g | 0,27 mL/g |

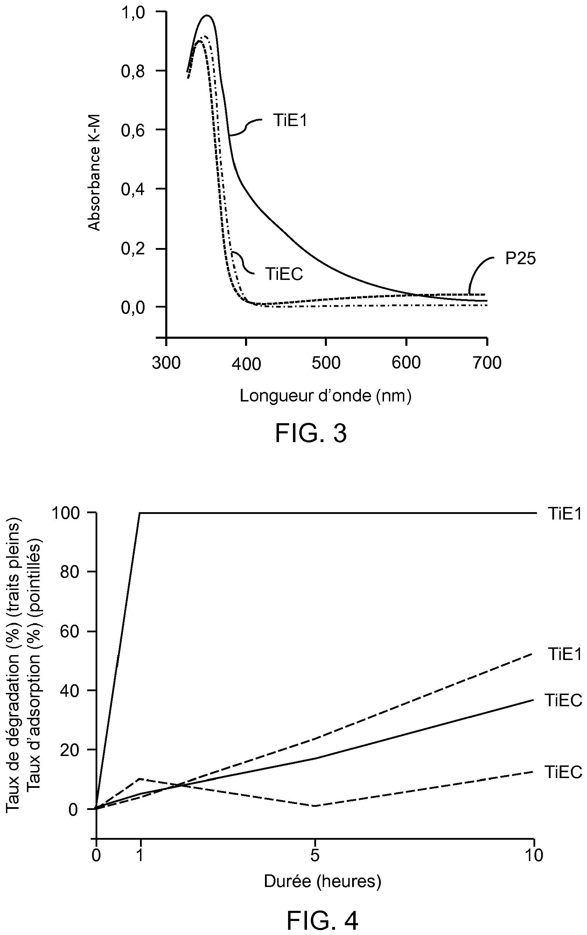

Cependant, les propriétés optiques sont totalement différentes. TiEC ne présente pas d'absorption de la lumière au-delà de 400 nm (tout comme le TiO₂ de référence P25) (figure 3). Au contraire, TiE1 présente une absorption de la lumière au-delà de 400 nm jusqu'à 700 nm au moins. Cette différence est due au dopage C et N direct de TiE1 qui a lieu pendant la synthèse et le lavage avec de l'isopropanol et l'utilisation de NMF, respectivement. Ce dopage s'est révélé stable après une immersion de TiE1 dans de l'eau pendant 24 h comme attesté par le même spectre UV-Vis de TiE1 avant et après le séjour dans l'eau.

Les résultats du test de dégradation du colorant Orange G Dye montrent clairement une dégradation rapide du colorant par TiE1, ce qui s'observe par le changement de couleur de la solution dans laquelle est immergé TiE1 qui devient transparente au bout d' 1 h seulement (concentration du colorant passant de 80 mg/l à 0,36 ± 0.06 mg/L en 1 h, à 0,08 ± 0,09 mg/L après 5 h et à 0.08 ± 0.07 mg/L après 10 h, compte tenu des écart-type, le taux de conversion équivaut à 100 % à 5 et 10 h) en comparaison à TiEC et au TiO₂ de référence P25 pour lesquels les solutions dans lesquelles ils ont été immergés restent colorées même après un temps de réaction de plus de 10 h sous lumière naturelle (passage d'une concentration du colorant de 80 mg/L à 76 ± 1 mg/L en 1 h pour TiEC et à 50 ± 3 mg/L après 10 h) (la concentration de la solution contenant le TiO₂ de référence P25 n'a pu être déterminée compte tenu de la taille nanométrique des particules qui a pour conséquence la présence de particules de TiO₂ même après filtration) (figure 4). La haute activité photocatalytique de TiE1 est confirmée par le test dans le noir pour lequel pratiquement aucune adsorption du colorant n'est obtenue après 1 h (figure 4). Après 10 h dans le noir, 50 % des molécules de colorant (correspondant à 1,6 mg/g de TiEl) ont été adsorbés par TiE1 alors que ce pourcentage n'atteint que 10 % pour TiEC (correspondant à 0,32 mg/g de TiEC) (figure 4). Ainsi TiE1 présente une meilleure capacité d'adsorption que TiEC alors qu'ils présentent tous deux des propriétés texturales similaires.

## Revendications

1. Procédé de préparation de dioxyde de titane (TiO₂) macro et mésoporeux cristallin, le procédé comprenant :
- la préparation d'un mélange acidifié comprenant un séparateur, le mélange étant acidifié à au moins 25 % en masse, préférablement au moins 30 %, préférablement au moins 33 %, préférablement au moins 35 %, préférablement environ 37 % en acide par la dissolution d'un séparateur dans un acide hydrate ;
- l'ajout en deux temps à une source de titane du mélange acidifié comprenant un séparateur et d'une source d'azote :
• dans un premier temps, le mélange acidifié comprenant un séparateur est ajouté à une solution comprenant la source de titane formant ainsi une solution de titane acidifiée, le séparateur étant un poly(éthylène glycol) ;
• dans un deuxième temps, la source d'azote est ajoutée à la solution de titane acidifiée formant ainsi une solution de titane dopé à l'azote ;
- l'obtention d'un gel de dioxyde de titane à partir de la solution de titane dopé à l'azote ;
- le lavage du gel de dioxyde de titane avec un alcool ;
- l'obtention d'un dioxyde de titane macro et mésoporeux cristallin à partir du gel de dioxyde de titane lavé.

2. Procédé selon la revendication 1, dans lequel le ratio molaire acide : source de titane est compris entre 40 % et 65 %, préférablement entre 50 % et 60 %, préférablement entre 52 % et 58 %, préférablement environ 55 %.

3. Procédé selon l'une des revendications 1 et 2, dans lequel le ratio molaire source d'azote : source de titane est compris entre 70 % et 100 %, préférablement entre 75 % et 95 %, préférablement encore entre 80 % et 90 %, préférablement environ 87 %.

4. Procédé selon l'une des revendications 1 à 3, dans lequel la source de titane est un alcoolate de titane, préférablement un alcoolate en C₁ à C₅ de titane, préférablement un tétra-alcoolate en C₁ à C₅ de titane, préférablement un tétra-alcoolate en C₂ à C₄, préférablement un tétra-alcoolate en C₃, préférablement un tétra-isopropanolate de titane.

5. Procédé selon l'une des revendications 1 à 4, dans lequel l'alcool est un alcool en C₁ à C₅, préférablement un alcool en C₂ à C₄, préférablement un alcool en C₃, préférablement le 2-propanol.

6. Procédé selon l'une des revendications 1 à 5, dans lequel l'acide hydrate est choisi parmi : l'acide chlorhydrique, l'acide nitrique, l'acide acétique, et l'acide phosphorique, préférablement l'acide chlorhydrique.

7. Procédé selon l'une des revendications 1 à 6, dans lequel le séparateur est un poly(éthylène glycol) de masse atomique moyenne comprise entre 1 et 150 kDa, préférablement entre 10 et 50 kDa, préférablement entre 15 et 25 kDa, préférablement environ 20 kDa.

8. Procédé selon la revendication 7, dans lequel le ratio molaire de l'unité EO du poly(éthylène glycol) : source de titane est compris entre 4 et 25 %, 4,75 et 22 %, préférablement entre 5 et 5,5 ou entre 17 et 20%, préférablement environ 5,3 % ou 18%.

9. Procédé selon l'une des revendications 1 à 8, dans lequel la source d'azote est un amide ou une amine, préférablement un amide, préférablement un N-alkyl en C₁ à C₃-formamide, préférablement le N-méthylformamide.

10. Procédé selon l'une des revendications 1 à 9, dans lequel la source d'azote est ajoutée après que la solution de titane acidifiée, à partir d'un aspect translucide, est devenue opaque.

11. Procédé selon la revendication 10, dans lequel la solution de titane dopé à l'azote est chauffée à une première température est comprise entre 30 et 70 °C, préférablement entre 35 et 65 °C, préférablement entre 37 et 45 °C, préférablement environ 40 °C, formant ainsi le gel de dioxyde de titane.

12. Procédé selon la revendication 11, dans lequel la durée du temps de chauffage est comprise entre 6 et 48 heures, préférablement entre 12 et 36 heures, préférablement entre 20 et 28 heures, préférablement environ 24 heures.

13. Procédé selon l'une des revendications 1 à 12, dans lequel le dioxyde de titane macro et mésoporeux est calciné après séchage à une température comprise entre 250 et 450 °C, préférablement 300 et 380 °C, préférablement 330 et 370 °C, préférablement environ 350 °C.

14. Procédé selon la revendication 13, dans lequel la calcination est effectuée pendant une durée comprise entre 4 et 6 heures, préférablement 4,5 et 5,5 heures, préférablement 4,75 et 5,25 heures, préférablement 5 heures.

15. Dioxyde de titane macro et mésoporeux cristallin, comprenant un réseau macroporeux présentant un diamètre moyen de pores comprise entre 1 µm et 5 µm, préférablement entre 2 µm et 4 µm, préférablement entre 2,5 µm et 3,5 µm, préférablement 3 µm et une épaisseur de paroi comprise entre 0,2 µm et 3,8 µm, préférablement entre 0,5 µm et 2,5 µm, préférablement entre 0,75 µm et 1,25 µm, préférablement 1 µm, et un réseau mésoporeux présentant un diamètre moyen de pores compris entre 5 et 20 nm, préférablement 5,8 et 10 nm, préférablement entre 6 et 7 nm ; une surface spécifique comprise entre 50 et 300 m²/g, préférablement entre 90 et 165 m²/g, préférablement entre 95 et 155 m²/g, préférablement entre 100 et 150 m²/g ; et un volume mésoporeux compris entre 0,05 et 0,7 mL/g, préférablement entre 0,07 et 0,5 mL/g, préférablement entre 0,09 et 0,3 mL/g, préférablement entre 0,1 et 0,2 mL/g.

## Patentansprüche

1. Verfahren zur Herstellung von makro- und mesoporösem kristallinem Titandioxid (TiO₂), wobei das Verfahren umfasst:
- die Herstellung einer angesäuerten Mischung, die einen Separator umfasst, wobei die Mischung auf mindestens 25 Massen-%, vorzugsweise mindestens 30 %, vorzugsweise mindestens 33 %, vorzugsweise mindestens 35 %, vorzugsweise etwa 37 % Säure durch die Auflösung eines Separators in einer Hydratsäure angesäuert ist;
- die zweistufige Zugabe der angesäuerten Mischung, die einen Separator umfasst, und einer Stickstoffquelle zu einer Titanquelle:
• in einem ersten Schritt wird die angesäuerte Mischung, die einen Separator umfasst, zu einer Lösung gegeben, die die Titanquelle umfasst, wodurch eine angesäuerte Titanlösung gebildet wird, wobei der Separator ein Poly(ethylenglykol) ist;
• in einem zweiten Schritt wird die Stickstoffquelle zu der angesäuerten Titanlösung gegeben, wodurch eine Stickstoff-dotierte Titanlösung gebildet wird;
- die Gewinnung eines Titandioxidgels aus der Stickstoff-dotierten Titanlösung;
- die Waschung des Titandioxidgels mit einem Alkohol;
- das Erhalten eines makro- und mesoporösen kristallinen Titandioxids aus dem gewaschenen Titandioxidgel.

2. Verfahren nach Anspruch 1, in dem das Molverhältnis von Säure : Titanquelle zwischen 40 % und 65 %, vorzugsweise zwischen 50 % und 60 %, vorzugsweise zwischen 52 % und 58 %, vorzugsweise bei etwa 55 % liegt.

3. Verfahren nach einem der Ansprüche 1 und 2, in dem das Molverhältnis von Stickstoffquelle : Titanquelle zwischen 70 % und 100 %, vorzugsweise zwischen 75 % und 95 %, vorzugsweise noch zwischen 80 % und 90 %, vorzugsweise bei etwa 87 % liegt.

4. Verfahren nach einem der Ansprüche 1 bis 3, in dem die Titanquelle ein Titanalkoholat, vorzugsweise ein C₁ bis C₅ Titanalkoholat, vorzugsweise ein C₁ bis C₅ Titantetraalkoholat, vorzugsweise ein C₂ bis C₄ Tetraalkoholat, vorzugsweise ein C₃ Tetraalkoholat, vorzugsweise ein Titantetraisopropanolat ist.

5. Verfahren nach einem der Ansprüche 1 bis 4, in dem der Alkohol ein C₁ bis C₅ Alkohol, vorzugsweise ein C₂ bis C₄ Alkohol, vorzugsweise ein C₃ Alkohol, vorzugsweise 2-Propanol ist.

6. Verfahren nach einem der Ansprüche 1 bis 5, in dem die Hydratsäure ausgewählt ist aus: Salzsäure, Salpetersäure, Essigsäure und Phosphorsäure, vorzugsweise Salzsäure.

7. Verfahren nach einem der Ansprüche 1 bis 6, in dem der Separator ein Poly(ethylenglykol) mit einer mittleren Atommasse zwischen 1 und 150 kDa, vorzugsweise zwischen 10 und 50 kDa, vorzugsweise zwischen 15 und 25 kDa, vorzugsweise bei etwa 20 kDa ist.

8. Verfahren nach Anspruch 7, in dem das Molverhältnis der EO-Einheit von dem Poly(ethylenglykol) : Titanquelle zwischen 4 und 25 %, 4,75 und 22 %, vorzugsweise zwischen 5 und 5,5 oder zwischen 17 und 20 %, vorzugsweise bei etwa 5,3 % oder 18 % liegt.

9. Verfahren nach einem der Ansprüche 1 bis 8, in dem die Stickstoffquelle ein Amid oder ein Amin, vorzugsweise ein Amid, vorzugsweise ein C₁ bis C₃ N-Alkyformamid, vorzugsweise N-Methylformamid ist.

10. Verfahren nach einem der Ansprüche 1 bis 9, in dem die Stickstoffquelle zugesetzt wird, nachdem die angesäuerte Titanlösung, ausgehend von einem durchsichtigen Aussehen, undurchsichtig geworden ist.

11. Verfahren nach Anspruch 10, in dem die Stickstoff-dotierte Titanlösung auf eine erste Temperatur zwischen 30 und 70 °C, vorzugsweise zwischen 35 und 65 °C, vorzugsweise zwischen 37 und 45 °C, vorzugsweise von ungefähr 40 °C erwärmt wird, wodurch sich das Titandioxidgel bildet.

12. Verfahren nach Anspruch 11, in dem die Dauer der Erwärmungszeit zwischen 6 und 48 Stunden, vorzugsweise zwischen 12 und 36 Stunden, vorzugsweise zwischen 20 und 28 Stunden, vorzugsweise etwa 24 Stunden beträgt.

13. Verfahren nach einem der Ansprüche 1 bis 12, in dem das makro- und mesoporöse Titandioxid nach einem Trocknen bei einer Temperatur zwischen 250 und 450 °C, vorzugsweise 300 und 380 °C, vorzugsweise 330 und 370 °C, vorzugsweise von etwa 350 °C kalziniert wird.

14. Verfahren nach Anspruch 13, in dem die Kalzinierung für einen Zeitraum zwischen 4 und 6 Stunden, vorzugsweise 4,5 und 5,5 Stunden, vorzugsweise 4,75 und 5,25 Stunden, vorzugsweise von 5 Stunden, durchgeführt wird.

15. Makro- und mesoporöses kristallines Titandioxid, umfassend ein makroporöses Netzwerk mit einem mittleren Porendurchmesser zwischen 1 µm und 5 µm, vorzugsweise zwischen 2 µm und 4 µm, vorzugsweise zwischen 2,5 µm und 3,5 µm, vorzugsweise von 3 µm und einer Wanddicke zwischen 0,2 µm und 3,8 µm, vorzugsweise zwischen 0,5 µm und 2,5 µm, vorzugsweise zwischen 0,75 µm und 1,25 µm, vorzugsweise von 1 µm, und ein mesoporöses Netzwerk mit einem mittleren Porendurchmesser zwischen 5 und 20 nm, vorzugsweise 5,8 und 10 nm, vorzugsweise zwischen 6 und 7 nm; einer spezifischen Oberfläche zwischen 50 und 300 m²/g, vorzugsweise zwischen 90 und 165 m²/g, vorzugsweise zwischen 95 und 155 m²/g, vorzugsweise zwischen 100 und 150 m²/g; und einem mesoporösen Volumen zwischen 0,05 und 0,7 ml/g, vorzugsweise zwischen 0,07 und 0,5 ml/g, vorzugsweise zwischen 0,09 und 0,3 ml/g, vorzugsweise zwischen 0,1 und 0,2 ml/g.

## Claims

1. A method for preparing crystalline macro and mesoporous titanium dioxide (TiO₂), the method comprising:
- preparing an acidified mixture comprising a separator, the mixture being acidified to at least 25% by mass, preferably at least 30%, preferably at least 33%, preferably at least 35%, preferably about 37% in acid by the dissolving a separator in a hydrate acid;
- adding the acidified mixture comprising a separator and a nitrogen source to a titanium source, in two stages:
-- in a first stage, the acidified mixture comprising a separator is added to a solution comprising the titanium source thus forming an acidified titanium solution, the separator being a poly(ethylene glycol);
-- in a second stage, the nitrogen source is added to the acidified titanium solution thus forming a nitrogen-doped titanium solution;
- obtaining a titanium dioxide gel from the nitrogen-doped titanium solution;
- washing the titanium dioxide gel with an alcohol;
- obtaining a crystalline macro and mesoporous titanium dioxide from the washed titanium dioxide gel.

2. The method according to claim 1, wherein the acid:titanium source molar ratio is comprised between 40% and 65%, preferably between 50% and 60%, preferably between 52% and 58%, preferably about 55%.

3. The method according to one of claims 1 and 2, wherein the nitrogen source:titanium source molar ratio is comprised between 70% and 100%, preferably between 75% and 95%, more preferably between 80% and 90%, preferably about 87%.

4. The method according to one of claims 1 to 3, wherein the titanium source is a titanium alkoxide, preferably a titanium C1 to C5 alkoxide, preferably a titanium tetra-C1 to C5 alkoxide, preferably a tetra-C2 to C4 alkoxide, preferably a tetra-C3 alkoxide, preferably a titanium tetra-isopropanolate.

5. The method according to one of claims 1 to 4, wherein the alcohol is a C1 to C5 alcohol, preferably a C2 to C4 alcohol, preferably a C3 alcohol, preferably 2-propanol.

6. The method according to one of claims 1 to 5, wherein the hydrate acid is selected from: hydrochloric acid, nitric acid, acetic acid, and phosphoric acid, preferably hydrochloric acid.

7. The method according to one of claims 1 to 6, wherein the separator is a poly(ethylene glycol) with an average atomic mass comprised between 1 and 150 kDa, preferably between 10 and 50 kDa, preferably between 15 and 25 kDa, preferably about 20 kDa.

8. The method according to claim 7, wherein the poly(ethylene glycol) EO unit :titanium source molar ratio is comprised between 4 and 25%, 4.75 and 22%, preferably between 5 and 5.5 or between 17 and 20%, preferably about 5.3% or 18%.

9. The method according to one of claims 1 to 8, wherein the nitrogen source is an amide or an amine, preferably an amide, preferably a N-C1 à C3 alkyl-formamide, preferably N-methylformamide.

10. The method according to one of claims 1 to 9, wherein the nitrogen source is added after the acidified titanium solution, from a translucent appearance, has become opaque.

11. The method according to claim 10, wherein the nitrogen-doped titanium solution is heated to a first temperature comprised between 30 and 70 °C, preferably between 35 and 65 °C, preferably between 37 and 45 °C, preferably about 40 °C, thus forming the titanium dioxide gel.

12. The method according to claim 11, wherein the duration of the heating time is comprised between 6 and 48 hours, preferably between 12 and 36 hours, preferably between 20 and 28 hours, preferably about 24 hours.

13. The method according to one of claims 1 to 12, wherein the macro and mesoporous titanium dioxide is calcined after drying at a temperature comprised between 250 and 450 °C, preferably 300 and 380 °C, preferably 330 and 370 °C, preferably about 350 °C.

14. The method according to claim 13, wherein the calcination is carried out for a duration comprised between 4 and 6 hours, preferably 4.5 and 5.5 hours, preferably 4.75 and 5.25 hours, preferably 5 hours.

15. A crystalline macro and mesoporous titanium dioxide, comprising a macroporous network having an average pore diameter comprised between 1 µm and 5 µm, preferably between 2 µm and 4 µm, preferably between 2.5 µm and 3.5 µm, preferably 3 µm and a wall thickness comprised between 0.2 µm and 3.8 µm, preferably between 0.5 µm and 2.5 µm, preferably between 0.75 µm and 1.25 µm, preferably 1 µm, and a mesoporous network having an average pore diameter comprised between 5 and 20 nm, preferably 5.8 and 10 nm, preferably between 6 and 7 nm; a specific surface comprised between 50 and 300 m²/g, preferably between 90 and 165 m²/g, preferably between 95 and 155 m²/g, preferably between 100 and 150 m²/g; and a mesoporous volume comprised between 0.05 and 0.7 mL/g, preferably between 0.07 and 0.5 mL/g, preferably between 0.09 and 0.3 mL/g, preferably between 0.1 and 0.2 mL/g.
